# EUROPEAN PATENT SPECIFICATION

(11) **EP 1 637 420 B1**
(45) Date of publication and mention of the grant of the patent: **24.12.2008**
(21) Application number: 04445094.8
(22) Date of filing: 15.09.2004
(51) Int. Cl.: B60S 1/48, B60S 1/56

(54) **Method and arrangement for washing equipment**
Verfahren und Anordnung zur Reinigung einer Anlage
Procédé et dispositif pour laver un équipement

(43) Date of publication of application: 22.03.2006
(73) Proprietor: SAAB AB, 581 88 Linköping (SE)
(72) Inventor: Larsson, Thomas, S-196 31 Kungsängen (SE); Dahlgren, Jan-Åke, S-175 45 Järfälla (SE); Silén, Arne, S-175 61 Järfälla (SE)
(74) Representative: Winblad, Hans Peter

(56) References cited:
- EP-A- 1 122 138
- WO-A-03/033317
- DE-A1- 3 512 109
- DE-A1- 10 151 981
- DE-A1- 19 850 639
- US-A- 3 612 647
- US-A- 6 123 384

## Description

The present invention relates to a method for washing an equipment, such equipment being a sight of a washing arrangement, the method being defined in the preamble of claim 1, and a washing arrangement according to the preamble of claim 8.

Methods and arrangements according to the previous paragraph are already known, see for example DE 195 99 349 A1. In this case, the equipment that is to be washed comprises a windscreen. The nozzles and the windscreen are arranged in a fixed position in relation to each other. In order to compensate for different speeds, there are double nozzles, set at different angles to the windscreen. The washing arrangement provides a relatively uneven washing effect over different parts of the windscreen. While certain central parts receive maximal washing effect, more peripheral parts remain almost unwashed.

DE 101 51 981 A1 discloses an equipment to be washed. A sensor is surrounded by a protecting shell, which is rotatable separate from or simultaneously with the sensor in a horizontal plane about a common vertical axis. Dirt on the protective shell is rotated sideways into a washing zone formed by fixed nozzles.

In DE 199 60 447 A1, it is proposed that the nozzles should be arranged so that they can be moved relative to the equipment that is to be washed, which equipment is here also a windscreen. The movement is achieved by means of link arms connected to the link arm system for the windscreen wipers. The solution can be assumed to provide a slightly more even washing effect over the equipment that is to be washed, but the washing effect can still vary considerably between, for example, upper and lower parts of the windscreen.

WO 03/033317 A1 describes a washing arrangement for a windscreen that can emit either a diverging jet or a focused jet. In spite of the ability to vary the shape of the jet, it does not provide an even washing effect over the equipment that is to be washed.

An object of the present invention is to achieve a method and a washing arrangement that enables the equipment or the part of the equipment that is to be washed to be subjected to an even and effective washing effect.

The object of the invention is achieved by means of a method characterized by the characterizing part of claim 1, and a washing arrangement characterized by the characterizing part of claim 8. As the equipment that is to be washed is rotatable in the washing zone, it is possible to control the washing effect and to achieve an evenly distributed treatment of the part of the equipment that is to be washed. In addition, as a result of the equipment being able to be rotated, it is possible to clean several different parts of the equipment with the same washing arrangement. For this purpose, the part that is to be washed is rotated into the washing zone of the washing arrangement. The method and the washing arrangement are suitable for use within marine applications, but can also be used within land-based applications.

The method and the washing arrangement are particularly suitable for applications where the equipment that is to be washed is already arranged to be able to be rotated. The equipment is a sight. The equipment can be intended for a wide range of types of radiation, for example visible light, infrared radiation, laser beams, radiation within the radar range, etc. A specific proposed field of application is washing sights on the deck of a vessel. This is a very harsh environment, where the sight is sprayed by salt water and, during cold periods of the year, is subjected to the formation of ice. Manual cleaning and/or de-icing are hazardous, due to the risk of slipping, rough seas, etc. In addition, with manual cleaning and/or de-icing, the person who is carrying out the work and his equipment will change the signature of the object, for example the vessel, so that it is easier to detect. This is not desirable.

According to the present invention the equipment is programmed to carry out specific movements within the washing zone formed by the fixed nozzles in conjunction with the washing medium. By programming the movements, the washing procedure can be optimized for the specific equipment. It is possible to prevent certain parts of the equipment being subjected to too violent a washing effect, while at the same time it can be ensured that parts of the equipment that are difficult to access are washed adequately, for example by increasing the time during which these difficult to access parts are subjected to washing or by increasing the washing pressure when the difficult to access parts are being washed. The movements can advantageously be carried out as oscillating movements, so that parts of the equipment that are to be washed are moved within the washing zone formed by the nozzles in conjunction with the washing medium.

The washing can be carried out using cleansing washing medium for the removal of dirt, such as salts, soot, dust, insects, bird droppings, etc. The washing can be utilized for de-icing purposes. A suitable method is characterized in that the washing is carried out using de-icing washing medium, such as hot water or alcohol.

According to another advantageous method, the movement of the equipment is controlled by means of a cursor, such as a bridge cursor. In this case, the cursor operator can determine which parts of the equipment are to be washed, how the equipment is to be rotated during the washing and the length of time that individual parts are to be washed.

For a more automated procedure, according to yet another advantageous method, the movement that the equipment is to carry out during a washing sequence is stored in a memory in advance and is controlled by a program. In addition, a plurality of alternative movement sequences for the equipment can advantageously be stored in advance and can be selected by an operator.

According to an advantageous embodiment of the washing arrangement, it comprises at least two fixed nozzles set a distance apart. Several separate nozzles can improve the accessibility to the parts of the equipment that are to be washed. The length of time that is required for the washing can also be shortened when several nozzles are activated at the same time, which is particularly valuable if the equipment has to be taken out of operation while the washing is being carried out.

The nozzles can be identical. Alternatively, at least one nozzle can be designed to generate a narrow jet and at least one nozzle can be designed to generate a wide jet. For example, a wide jet can be used to wash large non-sensitive parts of the equipment, while a narrow jet can be utilized for small and perhaps more sensitive parts of the equipment.

In an alternative embodiment, the washing arrangement is provided with at least one nozzle that can be adjusted between a narrow and a wide jet. The embodiment is suitable, for example, where the space for locating nozzles is limited. The adjustment of the jet also provides greater flexibility in possible washing sequences.

The washing arrangement suitably comprises a processor for controlling the movements of the equipment. The washing arrangement advantageously comprises a memory for storing the movement sequence for the equipment during the washing.

The washing arrangement is particularly suited for washing sights on vessels, and a specific embodiment is characterized in that the equipment consists of a sight that is mounted on the deck of a vessel in such a way that it can rotate in azimuth and elevation and in that the nozzles of the washing arrangement are permanently mounted on the deck of the vessel. The washing arrangement eliminates the need for a member of the crew to go on deck to de-ice and clean the sight, which has previously been a very dangerous and sometimes impossible task.

The invention will be described in greater detail below with reference to the attached drawings, in which:
Figure 1 shows a schematic embodiment of a washing arrangement according to the invention for a sight.
Figure 2 shows a schematic example of the control of a washing arrangement according to the invention.
Figure 3 shows in cross-section a schematic example of a nozzle that can be adjusted in a simple way that can be comprised in the washing arrangement according to the invention.

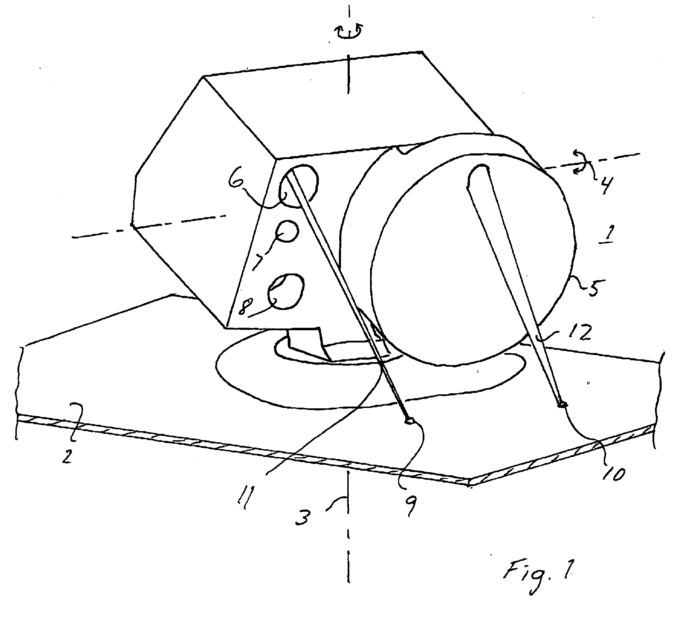

The washing arrangement shown in Figure 1 is intended to wash a sight 1 mounted on a plate 2 that can consist of the deck of a vessel. The sight 1 is arranged in such a way that it can rotate around a first axis 3 and a second axis 4 at right angles to the first axis 3. The sight 1 comprises a radar element with a radar antenna mounted in a casing 5 and a plurality of optical or opto-electronic sensors 6, 7, 8.

Two nozzles 9, 10 are arranged in the plate 2. The nozzle 9 generates a narrow jet 11 and, in the embodiment illustrated, is utilized for washing the relatively compact sensor 6. The nozzle 10 generates a wider jet 12 which, in the embodiment illustrated, washes the radar antenna casing 5. As the sight 1 can be rotated around two axes 3, 4 at right angles to each other, the part of the sight that is to be cleaned can easily be rotated to face a suitable nozzle. During the washing, the sight is rotated around its two axes 3, 4 in such a way that the part of the sight that is to be cleaned is exposed to the washing medium from the nozzles in a suitable way. One or several nozzles can be active at the same time.

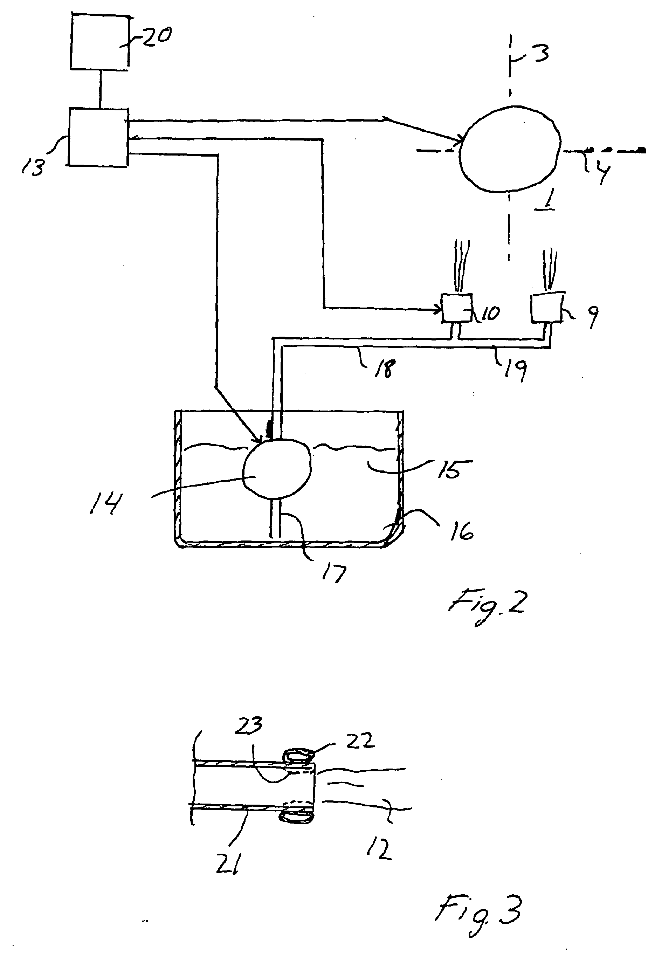

The washing is controlled according to Figure 2 by a processor 13 that controls the rotational movements of the sight 1 and the flow of washing medium to the nozzles 9, 10. The flow is controlled by the processor controlling a pumping arrangement with a pump motor 14 that pumps the washing medium 15 from a container 16 through a first pipe 17 submerged in the washing medium 15, a second pipe 18 between the pumping arrangement and a nozzle 10. A branch pipe 19 takes the washing medium to the nozzle 9. Alternatively, separate pipes can be arranged from the pumping arrangement to each individual nozzle. In an alternative embodiment, the pipes mentioned above can consist of flexible hoses or the like. The processor 13 can, if required, also control the adjustment of the nozzle between a wide jet and narrow jet. A simple adjusting mechanism will be described with reference to Figure 3 below. The processor 13 utilizes a memory 20. In the memory 20, data can be stored for the movement sequences that the equipment is to carry out.

Figure 3 shows schematically an adjustable nozzle 21. The nozzle is constructed of a flexible tubular material and has a surrounding ring 22 with an internal diameter that can be varied. The internal diameter of the ring 22 is controlled by the processor 13 via a technical arrangement that pumps up the ring. By this means, the tubular material of the nozzle is compressed so that the flow of washing medium is constricted. Chain-dotted lines 23 indicate the inward curving that can be achieved. As an alternative to pumping up the ring, a mechanical arrangement can be arranged which reduces the internal diameter of the ring, for example utilizing electromagnets or the like.

The invention is not limited to the embodiments described above as examples, but can be modified within the framework of the following patent claims.

## Claims

1. Method for washing an equipment of a washing arrangement with washing medium (15) being sprayed out through one or several fixed nozzles (9, 10) of said washing arrangement, **characterized in that** the equipment that is to be washed is a sight (1), which is rotatable around a first axis (3) and a second axis (4) at right angles to each other, and the part of the sight (1) that is to be washed is rotated into a washing zone formed by the fixed nozzles (9, 10) in conjunction with the washing medium (15), the sight (1) is programmed to carry out specific movements within the washing zone formed by the fixed nozzles (9, 10) in conjunction with the washing medium (15).

2. Method according to Claim 1, **wherein** the specific movements are carried out as oscillating movements, so that parts of the equipment that are to be washed are moved within the washing zone formed by the nozzles (9, 10) in conjunction with the washing medium (15).

3. Method according to Claim 1 or 2, **wherein** the washing is carried out using a cleansing washing medium.

4. Method according to Claim 1 or 2, **wherein** the washing is carried out using a de-icing washing medium, such as hot water or alcohol.

5. Method according to any one of the preceding claims, **wherein** the movement of the equipment is controlled by means of a cursor, such as a bridge cursor.

6. Method according to any one of the preceding Claims 1-4, **wherein** the movement that the equipment is to carry out during a washing sequence is stored in a memory (20) in advance and is controlled by a program.

7. Method according to Claim 6, **wherein** a plurality of alternative movement sequences for the equipment can be stored in advance and can be selected by an operator.

8. Washing arrangement for washing an equipment of said washing arrangement comprising at least one fixed nozzle (9, 10), with a pipe (18) connected to each nozzle for conveying washing medium (15) from a container by means of a pump arrangement, **characterized in that** the equipment that is to be washed is a sight (1), which is rotatable around a first axis (3) and a second axis (4) at right angles to each other, and the equipment is arranged to be rotated into a washing zone formed by the fixed nozzles (9, 10) in conjunction with the washing medium (15), the equipment is programmed to carry out specific movements within the washing zone formed by the fixed nozzles (9, 10) in conjunction with the washing medium (15).

9. Washing arrangement according to Claim 8, **wherein** it comprises at least two fixed nozzles (9, 10) set a distance apart.

10. Washing arrangement according to Claim 9, **wherein** at least one nozzle (9) can be designed to generate a narrow jet and at least one nozzle (10) can be designed to generate a wide jet.

11. Washing arrangement according to any one of Claims 8-10, **wherein** the washing arrangement is provided with at least one nozzle that can be adjusted between a narrow and a wide jet.

12. Washing arrangement according to any one of Claims 8-11, **wherein** the washing arrangement comprises a processor (13) for controlling the movements of the equipment.

13. Washing arrangement according to any one of Claims 8-12, **wherein** the washing arrangement comprises a memory (20) for storing data for the movement sequence for the equipment.

14. Washing arrangement according to any one of Claims 8-13, **wherein** the sight (1) is mounted on the deck of a vessel in such a way that it can rotate in azimuth and elevation and in that the nozzles (9, 10) of the washing arrangement are permanently mounted on the deck of the vessel.

## Patentansprüche

1. Verfahren zum Reinigen einer Anlage von einer Reinigungsanordnung, wobei ein Reinigungsmedium (15) durch eine oder mehrere feste Düsen (9, 10) ausgesprüht wird, **dadurch gekennzeichnet, dass** die zu reinigende Anlage eine Erfassungsvorrichtung (1) ist, die um eine erste Achse (3) und eine zweite Achse (4) im rechten Winkel zueinander drehbar ist, und der zu reinigende Bereich der Erfassungsvorrichtung (1) wird in eine durch die festen Düsen (9, 10) in Verbindung mit dem Reinigungsmedium (15) ausgebildete Reinigungszone gedreht, wobei die Erfassungsvorrichtung (1) programmiert ist, spezifische Bewegungen innerhalb der durch die festen Düsen (9, 10) in Verbindung mit dem Reinigungsmedium (15) ausgebildeten Reinigungszone auszuführen.

2. Verfahren gemäß Anspruch 1, bei dem die spezifischen Bewegungen derart als oszillierende Bewegungen ausgeführt werden, dass zu reinigende Bereiche der Anlage innerhalb der durch die Düsen (9, 10) in Verbindung mit dem Reinigungsmedium (15) ausgebildeten Reinigungszone bewegt werden.

3. Verfahren gemäß Anspruch 1 oder 2, bei dem die Reinigung unter Verwendung eines säubernden Reinigungsmediums ausgeführt wird.

4. Verfahren gemäß Anspruch 1 oder 2, bei dem die Reinigung unter Verwendung eines enteisenden Reinigungsmediums wie heißem Wasser oder Alkohol ausgeführt wird.

5. Verfahren gemäß einem der vorangegangenen Ansprüche, bei dem die Bewegung der Anlage mittels eines Cursors wie eines Positionscursors gesteuert wird.

6. Verfahren gemäß einem der vorangegangenen Ansprüche 1-4, bei dem die Bewegung, welche die Anlage während einer Reinigungssequenz ausführen muss, im Voraus in einem Speicher (20) abgespeichert und durch ein Programm gesteuert wird.

7. Verfahren gemäß Anspruch 6, bei dem eine Vielzahl von alternativen Bewegungssequenzen für die Anlage im Voraus abgespeichert und durch einen Bediener ausgewählt werden kann.

8. Reinigungseinrichtung zum Reinigen einer Anlage von der Reinigungseinrichtung, umfassend zumindest eine feste Düse (9, 10), wobei ein Rohr (18) mit jeder Düse verbundenen ist, um ein Reinigungsmedium (15) von einem Behälter mittels einer Pumpeneinrichtung zu befördern,
**dadurch gekennzeichnet, dass**
die zu reinigende Anlage eine Erfassungsvorrichtung (1) ist, die um eine erste Achse (3) und eine zweite Achse (4) im rechten Winkel zueinander drehbar ist, und die Anlage eingerichtet ist, in eine durch die Düsen (9, 10) in Verbindung mit dem Reinigungsmedium (15) ausgebildeten Reinigungszone bewegt zu werden, wobei die Anlage programmiert ist, spezifische Bewegungen innerhalb der durch die festen Düsen (9, 10) in Verbindung mit dem Reinigungsmedium (15) ausgebildeten Reinigungszone auszuführen.

9. Reinigungseinrichtung gemäß Anspruch 8, bei der sie zumindest zwei in einem entfernten Abstand vorgesehene feste Düsen (9, 10) umfasst.

10. Reinigungseinrichtung gemäß Anspruch 9, bei der zumindest eine Düse (9) ausgelegt sein kann, einen schmalen Strahl zu erzeugen, und zumindest eine Düse (10) ausgelegt sein kann, einen breiten Strahl zu erzeugen.

11. Reinigungseinrichtung gemäß einem der Ansprüche 8-10, bei der die Reinigungseinrichtung mit zumindest einer Düse versehen ist, die zwischen einem schmalen und einem breiten Strahl eingestellt werden kann.

12. Reinigungseinrichtung gemäß einem der Ansprüche 8-11, bei der die Reinigungseinrichtung einen Prozessor (13) umfasst, um die Bewegungen der Anlage zu steuern.

13. Reinigungseinrichtung gemäß einem der Ansprüche 8-12, bei der die Reinigungseinrichtung einen Speicher (20) umfasst, um Daten für die Bewegungssequenz für die Anlage abzuspeichern.

14. Reinigungseinrichtung gemäß einem der Ansprüche 8-13, bei der die Erfassungsvorrichtung (1) an dem Verdeck eines Behältnisses auf eine solche Weise angebracht ist, dass sie sich im Azimuth und in einer Höhe drehen kann, und **dadurch**, dass die Düsen (9, 10) der Reinigungseinrichtung permanent am Verdeck des Behältnisses angebracht sind.

## Revendications

1. Procédé pour laver un équipement d'un dispositif de lavage avec un milieu de lavage (15) qui est pulvérisé par une ou plusieurs buses fixes (9, 10) dudit dispositif de lavage, **caractérisé en ce que** l'équipement qui doit être lavé est un viseur (1), qui peut tourner autour d'un premier axe (3) et d'un second axe (4) en angle droit l'un par rapport à l'autre, et la partie du viseur (1) qui doit être lavée, tourne dans une zone de lavage formée par les buses fixes (9, 10) conjointement au milieu de lavage (15), le viseur (1) est programmé pour réaliser des mouvements spécifiques dans la zone de lavage formée par les buses fixes (9, 10) conjointement au milieu de lavage (15).

2. Procédé selon la revendication 1, dans lequel les mouvements spécifiques sont réalisés comme des mouvements oscillants, de sorte que les parties de l'équipement qui doivent être lavées, sont déplacées dans la zone de lavage formée par les buses (9, 10) conjointement au milieu de lavage (15).

3. Procédé selon la revendication 1 ou 2, dans lequel le lavage est réalisé en utilisant un milieu de lavage nettoyant.

4. Procédé selon la revendication 1 ou 2, dans lequel le lavage est réalisé en utilisant un milieu de lavage dégivrant, tel que de l'eau chaude ou de l'alcool.

5. Procédé selon l'une quelconque des revendications précédentes, dans lequel le mouvement de l'équipement est contrôlé au moyen d'un curseur, tel qu'un curseur de rapprochement.

6. Procédé selon l'une quelconque des revendications 1 à 4, dans lequel le mouvement que l'équipement doit réaliser pendant une séquence de lavage est stocké dans une mémoire (20) à l'avance et est contrôlé par un programme.

7. Procédé selon la revendication 6, dans lequel une pluralité de séquences de mouvement en variante pour l'équipement peut être stockée à l'avance et peut être sélectionnée par un opérateur.

8. Dispositif de lavage pour laver un équipement dudit dispositif de lavage comprenant au moins une buse fixe (9, 10), avec un tuyau (18) raccordé à chaque buse pour transporter le milieu de lavage (15) d'un récipient au moyen d'un dispositif de pompe, **caractérisé en ce que** l'équipement qui doit être lavé est un viseur (1), qui peut tourner autour d'un premier axe (3) et d'un second axe (4) en angle droit l'un par rapport à l'autre, et le dispositif est agencé pour être entraîné en rotation dans une zone de lavage formée par les buses fixes (9, 10) conjointement au milieu de lavage (15), l'équipement est programmé pour réaliser des mouvements spécifiques à l'intérieur de la zone de lavage formée par les buses fixes (9, 10) conjointement au milieu de lavage (15).

9. Dispositif de lavage selon la revendication 8, dans lequel il comprend au moins deux buses fixes (9, 10) disposées à une certaine distance.

10. Dispositif de lavage selon la revendication 9, dans lequel au moins une buse (9) peut être conçue pour générer un jet étroit et au moins une buse (10) peut être conçue pour générer un jet large.

11. Dispositif de lavage selon l'une quelconque des revendications 8 à 10, dans lequel le dispositif de lavage est prévu avec au moins une buse qui peut être réglée entre un jet étroit et un jet large.

12. Dispositif de lavage selon l'une quelconque des revendications 8 à 11, dans lequel le dispositif de lavage comprend un processeur (13) pour contrôler les mouvements de l'équipement.

13. Dispositif de lavage selon l'une quelconque des revendications 8 à 12, dans lequel le dispositif de lavage comprend une mémoire (20) pour stocker des données pour la séquence de mouvement pour l'équipement.

14. Dispositif de lavage selon l'une quelconque des revendications 8 à 13, dans lequel le viseur (1) est monté sur le pont d'un vaisseau de sorte qu'il peut tourner en azimut et en élévation et en ce que les buses (9, 10) du dispositif de lavage sont montées de manière permanente sur le pont du vaisseau.
